# EUROPÄISCHE PATENTANMELDUNG

(11) **EP 4 628 738 A1**
(43) Veröffentlichungstag der Anmeldung: **08.10.2025**
(21) Anmeldenummer: 24218653.4
(22) Anmeldetag: 10.12.2024
(51) Int. Cl.: F16B 5/01, F16B 5/02, F16B 37/12, B64G 1/10, B64G 1/64, F16B 31/00

(54) **VERBINDUNGSEINRICHTUNG**

(30) Priorität: 02.04.2024 DE 102024109240
(71) Anmelder: Deutsches Zentrum für Luft- und Raumfahrt e.V., 53227 Bonn (DE)
(72) Erfinder: Ring, Alexander, 70199 Stuttgart (DE); Sakraker-Özmen, Isil, 53227 Bonn (DE); Hümbert, Simon, 53227 Bonn (DE)
(74) Vertreter: Schlimme, Wolfram

(57) **Zusammenfassung**

Verbindungseinrichtung zur Herstellung einer mechanischen Verbindung zwischen einem ersten Körper (11) und zumindest einem zweiten Körper (12), mit einem ersten Verbindungselement (20) und einem mit diesem zusammenwirkenden zweiten Verbindungselement (22), wobei das zweite Verbindungselement (22) einen Eingriffsabschnitt (27) für einen Kopplungsabschnitt (28) des ersten Verbindungselements (20) aufweist und wobei das erste Verbindungselement (20) und das zweite Verbindungselement (22) ausgebildet sind, um im miteinander verbundenen Zustand eine Formschlussverbindung zu bilden, zeichnet sich dadurch aus, dass der Eingriffsabschnitt (27) an einem Halterungsbauteil (29) ausgebildet ist, das mit einem Kern des zweiten Verbindungselements (22) verbunden ist, wobei das Halterungsbauteil (29) und/oder das zweite Verbindungselement (22) aus einem thermoplastischen Material besteht oder ein solches aufweist, und dass zumindest eine Feder (3) vorgesehen ist, die eine die beiden Verbindungselemente (20, 22) und/oder die beiden Körper (11, 12) voneinander abstoßende Kraft aufbringt, welche die beiden Verbindungselemente (20, 22) oberhalb einer vorgegebenen Temperaturschwelle (T₁) voneinander weg bewegt.

## Beschreibung

### TECHNISCHES GEBIET

Die Erfindung betrifft eine Verbindungseinrichtung nach dem Oberbegriff des Patentanspruchs 1. Sie betrifft weiterhin einen Weltraumgegenstand mit zumindest zwei Strukturbauteilen, die mittels zumindest einer derartigen Verbindungseinrichtung miteinander verbunden sind.

### HINTERGRUND DER ERFINDUNG

Weltraumgegenstände, wie zum Beispiel Satelliten, Weltraumstationen oder Teile davon, werden üblicherweise nach Ablauf ihrer Lebensdauer in eine Umlaufbahn um die Erde befördert, die zu einem Wiedereintritt in die Erdatmosphäre führt, so dass die beim Wiedereintritt auftretenden hohen Temperaturen ein Verglühen des Weltraumgegenstandes bewirken. Bei besonders großen Weltraumgegenständen kann jedoch die Zeit beim Wiedereintritt, in der der Weltraumgegenstand den hohen Temperaturen ausgesetzt ist, nicht ausreichen, um den Weltraumgegenstand vollständig zu verbrennen. Die Folge davon ist, dass Trümmerteile verbleiben, die auf die Erdoberfläche stürzen. Es wird daher angestrebt, dass sich ein wieder in die Erdatmosphäre eintretender Weltraumgegenstand in Einzelteile zerlegt.

Primärstrukturen von Satelliten sind mittels Verbindungselementen, wie beispielsweise Schrauben, miteinander verbunden, die üblicherweise aus metallischen Werkstoffen bestehen und daher hohe Schmelztemperaturen aufweisen. Es wurden bislang unterschiedliche Konzepte entwickelt, um bei einem Wiedereintritt in die Erdatmosphäre eine gezielt erhöhte Aufbruchshöhe der Primärstruktur zu erreichen. Gewerbliche Anwendung finden solche Technologien jedoch noch kaum bis gar nicht. Bei einem Nichterfüllen von bestehenden Regulierungen werden daher kostspielige kontrollierte Wiedereintritte in die Erdatmosphäre durchgeführt. Die erforschten Technologien sollen als Folge ein effizienteres Verglühen der kritischen Komponenten im Inneren des Satelliten ermöglichen. Folgende Methoden wurden bisher entwickelt:
- nicht-explosive Vorrichtungen, bei denen eine Schraube durch gezielte aktive Aufheizung eines Formgedächtnis-Aktuators an einer Sollbruchstelle versagt;
- Unterlegscheiben aus einem metallischen Material mit im Vergleich zu den anderen Verbindungselementen reduzierter Schmelztemperatur;
- Sandwich Struktur Einsätze aus thermoplastischem Material.

### STAND DER TECHNIK

Aus der TW 201627202 A ist eine passive Vorrichtung zur Erleichterung des Auflösens eines Raumfahrtsystems beim Wiedereintritt in die Erdatmosphäre bekannt, bei der die Verbindungselemente Gewindeverbindungen aufweisen und Zünderbaugruppen verwenden können, die Dichtungen ähneln und bei denen Sprengkapseln in Schraubenlöchern als Aktuatoren vorgesehen sind.

Aus der US 5 695 306 A ist eine Schmelzverbindung mit einer Schmelzlegierung bekannt, die eine Legierung mit niedriger Schmelztemperatur, wie Wismut-Blei oder Wismut-Zinn, umfasst.

Die DE 10 2016 205 326 A1 zeigt und beschreibt eine thermisch zerlegbare Befestigungsvorrichtung, die eine Schraube umfasst, welche aus einem Schaft und einem Kopf besteht, die mittels eines Lotmaterials verbunden sind, das eine geringere Schmelztemperatur aufweist als jene Temperaturen, die während des Wiedereintritts in die Atmosphäre entstehen.

Die DE 10 2016 212 582 A1 zeigt und beschreibt eine Verbindungsanordnung für einen Satelliten mit thermisch kontrolliertem Bruchverhalten, die ein Aktuatorelement beinhaltet, das auf einem Koppelelement ruht. Das Aktuatorelement und das Koppelelement besitzen unterschiedliche thermische Ausdehnungseigenschaften. Dadurch wirkt das Aktuatorelement bei Erreichen einer bestimmten Temperatur mit einer Kraft auf das Koppelelement, die ausreicht, um eine vorbestimmte Bruchstelle zu durchbrechen.

Nachteilig bei diesen bekannten Vorrichtungen ist, dass die jeweilige Schwellentemperatur, die ein Aufschmelzen einer Verbindung oder das Auslösen eines Aktuators bewirkt und zu einem Versagen der Hauptstrukturen von üblichen Satelliten und damit zu einem Auseinanderbrechen des Satelliten führt, erst einige Zeit nach Beginn der Wiedereintrittsphase erreicht wird. Dadurch wird die Zeit verkürzt, in der die nach dem Auseinanderbrechen entstehenden Einzelteile noch verbrennen können.

### DARSTELLUNG DER ERFINDUNG

Aufgabe der vorliegenden Erfindung ist es, eine Verbindungseinrichtung anzugeben, die beim Wiedereintritt eines Weltraumgegenstandes in die Erdatmosphäre bereits frühzeitig zu einem Aufbrechen der Struktur führt. Zudem soll ein Weltraumgegenstand angegeben werden, der sich beim Wiedereintritt in die Erdatmosphäre bereits zu einem frühen Zeitpunkt zerlegt.

Der auf die Verbindungseinrichtung gerichtete Teil der Aufgabe wird gelöst mit den Merkmalen des Patentanspruchs 1.

Eine Verbindungseinrichtung zur Herstellung einer mechanischen Verbindung zwischen einem ersten Körper und zumindest einem zweiten Körper, mit einem ersten Verbindungselement und einem mit diesem zusammenwirkenden zweiten Verbindungselement, wobei das zweite Verbindungselement einen Eingriffsabschnitt für einen Kopplungsabschnitt des ersten Verbindungselements aufweist und wobei das erste Verbindungselement und das zweite Verbindungselement ausgebildet sind, um im miteinander verbundenen Zustand eine Formschlussverbindung zu bilden, zeichnet sich erfindungsgemäß dadurch aus, dass der Eingriffsabschnitt an einem Halterungsbauteil ausgebildet ist, das mit einem Kern des zweiten Verbindungselements verbunden ist, wobei das Halterungsbauteil und/oder das zweite Verbindungselement aus einem thermoplastischen Material besteht oder ein solches aufweist, und dass zumindest eine Feder vorgesehen ist, die eine die beiden Verbindungselemente und/oder die beiden Körper voneinander abstoßende Kraft aufbringt, welche die beiden Verbindungselemente oberhalb einer vorgegebenen Temperaturschwelle voneinander weg bewegt.

### VORTEILE

Das Vorsehen der zumindest einen Feder bewirkt in Verbindung mit dem Halterungsbauteil aus einem thermoplastischen Material bereits frühzeitig beim thermisch bedingten Erweichen des thermoplastischen Materials, also bereits in der Anfangsphase eines Wiedereintritts, ein Auseinanderbrechen der Verbindungseinrichtung, da die bei Erreichen der Temperaturschwelle, also der Schwellentemperatur, entstehende Federkraft ein Auftrennen der Struktur des schon weich gewordenen, aber noch nicht vollständig aufgelösten thermoplastischen Materials bewirkt.

Weitere bevorzugte und vorteilhafte Ausgestaltungsmerkmale der erfindungsgemäßen Verbindungseinrichtung sind Gegenstand der Unteransprüche 2 bis 12.

Vorzugsweise entfaltet die Feder ihre abstoßende Kraft erst oberhalb der vorgegebenen Temperaturschwelle. Diese Ausführungsform besitzt den Vorteil, dass während des regulären Betriebs, beispielsweise eines Satelliten, also vor Erreichen der Temperaturschwelle, keine Federkräfte auf die Verbindungseinrichtung wirken und diese somit nicht dadurch belastet ist.

Dabei ist es weiter von Vorteil, wenn die Feder aus einer Hochtemperatur-Formgedächtnislegierung besteht oder eine solche aufweist und wenn die Feder die abstoßende Kraft erst in einem Formgedächtniszustand oberhalb der vorgegebenen Temperaturschwelle aufbringt.

Bevorzugterweise liegt die vorgegeben Temperaturschwelle im Bereich der Schmelztemperatur oder im Bereich der Glasübergangstemperatur des thermoplastischen Materials.

Besonders vorteilhaft ist dabei, wenn die Schwellentemperatur der Hochtemperatur-Formgedächtnislegierung der Feder, bei der die Feder ihre federnde Eigenschaft zurückerhält oder verstärkt, niedriger ist als die Schmelztemperatur oder als die Glasübergangstemperatur des thermoplastischen Materials. Ist dann die Federkraft größer als die maximale Zugfestigkeit des durch die Temperatureinwirkung weich gewordenen thermoplastischen Materials, zerreißt das Halterungsbauteil aus thermoplastischem Material und die Verbindung zwischen den beiden Körpern ist aufgelöst. Bei teilkristallinem thermoplastischem Material trifft der Begriff der Schmelztemperatur zu, bei amorphem thermoplastischen Material ist hingegen die Glasübergangtemperatur die relevante Größe, bei der die Festigkeit, insbesondere die Zugfestigkeit, des thermoplastischen Materials drastisch abnimmt.

Von Vorteil ist dabei eine Ausführungsform, bei der die zumindest eine Feder zwischen dem ersten Verbindungselement und dem ersten Körper wirkt. Die Feder stützt sich dabei - unmittelbar oder mittelbar - am ersten Körper und an dem Verbindungselement ab und drückt dieses vom ersten Körper weg und aus der Verbindung mit dem zweiten Körper heraus.

Alternativ kann die zumindest eine Feder zwischen dem ersten Verbindungselement und dem zweiten Körper wirken und sich an diesen beiden Bauteilen - unmittelbar oder mittelbar - abstützen.

Schließlich kann in einer weiteren alternativen Ausgestaltungsform die zumindest eine Feder zwischen dem ersten Körper und dem zweiten Körper wirken und sich an diesen beiden Körpern - unmittelbar oder mittelbar - abstützen.

Besonders Vorteilhaft ist es, wenn die Feder eine Druckfeder ist. Durch die Hochtemperatur-Formgedächtnislegierung baut diese Feder ihre Druckkraft erst auf oder verstärkt eine anfänglich vorhandene Druckfederkraft erst bei Erreichen einer materialspezifisch vorgegebenen Schwellentemperatur, die im Bereich der Schmelztemperatur oder der Glasübergangstemperatur liegt.

Bei einer bevorzugten Ausführungsform, die mit anderen Ausführungsformen kombinierbar ist, ist vorgesehen, dass das thermoplastische Material einen Schmelzpunkt oder einen Glasübergangspunkt aufweist, der in einem Bereich zwischen 150 °C und 300 °C, vorzugsweise zwischen 200 °C und 250 °C liegt.

Besonders bevorzugt ist auch eine Ausführungsform, die mit anderen Ausführungsformen kombinierbar ist und bei der die Temperaturschwelle der Hochtemperatur-Formgedächtnislegierung in einem Bereich zwischen 150 °C und 300 °C, vorzugsweise zwischen 200 °C und 250 °C liegt.

Besonders Vorteilhaft ist eine Ausführungsform, bei der der Eingriffsabschnitt und der Kopplungsabschnitt eine Gewindepaarung bilden. Beim Erweichen des thermoplastischen Materials und dem im Wesentlichen zeitgleichen Aufbau der Federkraft versagt das thermoplastische Material in den feinstrukturierten Gewindegängen zu einem besonders frühen Zeitpunkt, so dass die on der Verbindungseinrichtung bestimmte Verbindung zwischen den beiden Körpern frühzeitig auflöst und die Körper entkoppelt.

Dabei ist es besonders vorteilhaft, wenn das erste Verbindungselement eine Schraube und das zweite Verbindungselement eine Mutter oder ein Innengewindeeinsatz ist.

Der auf den Weltraumgegenstand gerichtete Teil der Aufgabe wird gemäß Patentanspruch 10 gelöst durch einen Weltraumgegenstand mit zumindest zwei Strukturbauteilen, die mittels zumindest einer erfindungsgemäßen Verbindungseinrichtung miteinander verbunden sind. Ein solchermaßen ausgestalteter Weltraumgegenstand zerlegt sich bereits in der Anfangsphase des Wiedereintritts in kleinere Einzelkomponenten, die in dem beim Wiedereintritt in die Atmosphäre entstehenden Hochtemperaturplasma jeweils schnell und nahezu vollständig verglühen können.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine schematische Darstellung eines aus mehreren Einzelkomponenten bestehenden Weltraumgegenstandes, die mittels erfindungsgemäßer Verbindungseinrichtungen miteinander verbunden sind, und
- Fig. 2: eine Schnittzeichnung durch eine erfindungsgemäße Verbindungseinrichtung in einem Weltraumgegenstand.

### DARSTELLUNG VON BEVORZUGTEN AUSFÜHRUNGSBEISPIELEN

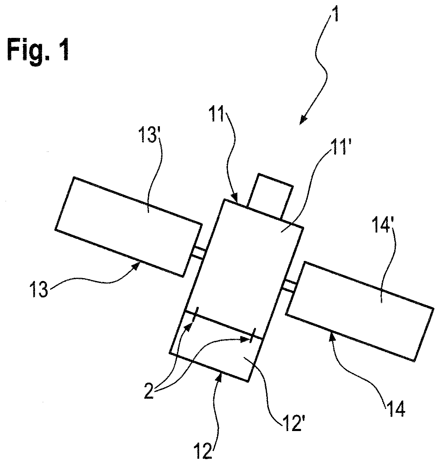

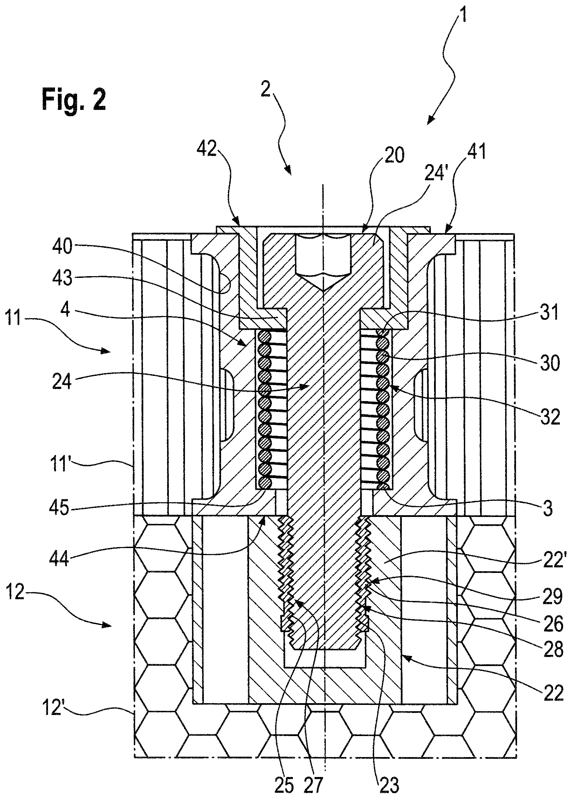

Fig. 1 zeigt schematisch einen Weltraumgegenstand 1 in Form eines Satelliten, der aus mehreren, Einzelkomponenten bildenden Körpern 11, 12, 13, 14 besteht, die untereinander jeweils mit mehreren Verbindungseinrichtungen 2 verbunden sind und von denen eine nachstehend anhand der Fig. 2 beispielhaft beschrieben ist. Der Weltraumgegenstand 1 weist im gezeigten Beispiel vier Strukturbauteile auf, die jeweils einem der Körper 11, 12, 13, 14 zugeordnet sind, nämlich eine Satellitenrumpfstruktur 11', eine Batteriepack-Struktur 12', eine erste Solarpanelstruktur 13' und eine zweite Solarpanelstruktur 14'. Diese Strukturbauteile sind jeweils mittels der zugeordneten Verbindungseinrichtungen 2 miteinander verbunden, von denen in Fig. 1 nur zwei Verbindungseinrichtungen 2 symbolisch dargestellt sind.

Die in Fig. 2 wiedergegebene Verbindungseinrichtung 2 ist beispielhaft als Schraubverbindung mit einer Gewindepaarung gezeigt; die Erfindung kann jedoch auch bei jeder anderen mechanischen Verbindung mittels eines Verbindungselements, beispielsweise bei einer Verbindung mittels Nieten, Zapfen oder ähnlichem, verwirklicht sein, bei denen ein Teil des Verbindungselements aus einem thermoplastischen Material besteht.

Fig. 2 zeigt eine der erfindungsgemäßen Verbindungseinrichtungen 2 zur Herstellung einer mechanischen Verbindung, beispielsweise zwischen dem ersten Körper 11 und dem zweiten Körper 12. Die Verbindungseinrichtungen zwischen den übrigen Körpern sind im Wesentlichen identisch ausgebildet und es gilt diesbezüglich auch die nachstehende Beschreibung.

Die Verbindungseinrichtung 2 besteht aus einem ersten Verbindungselement 20 und einem mit diesem zusammenwirkenden zweiten Verbindungselement 22. Das erste Verbindungselement 20 ist von einer mit einem Außengewinde 23 versehenen Schraube 24 gebildet. Das zweite Verbindungselement 22 ist mit einem Innengewinde 25 versehen, das an einem als Innengewindeeinsatz 26 ausgebildeten Halterungsbauteil 29 gebildet ist. Das Innengewinde 25 bildet einen Eingriffsabschnitt 27 für einen vom Außengewinde 23 gebildeten Kopplungsabschnitt 28 des ersten Verbindungselements 20; der Eingriffsabschnitt 27 und der Kopplungsabschnitt 28 bilden damit eine innere Gewindeverbindung. Somit sind das erste Verbindungselement 20 und das zweite Verbindungselement 22 ausgebildet, um im miteinander verbundenen Zustand eine Formschlussverbindung zu bilden.

Der Innengewindeeinsatz 26 ist mit einem aus einem thermoplastischen Material bestehenden oder ein solches Material aufweisenden Kern 22' des zweiten Verbindungselements 22 verbunden; im gezeigten Beispiel mittels einer äußeren Gewindeverbindung 21 in den Kern 22' eingeschraubt. Alternativ oder zusätzlich kann das Halterungsbauteil 29 aus thermoplastischem Material bestehen oder ein solches Material aufweisen.

Des Weiteren ist eine als Druckfeder 30 ausgebildete Feder 3 vorgesehen, die bevorzugt aus einer Hochtemperatur-Formgedächtnislegierung besteht oder eine solche aufweist und die auf die beiden Verbindungselemente 20, 22 und/oder die beiden Körper 11, 12 voneinander abstoßende Kraft aufbringt, so dass die Feder 3 im gezeigten Beispiel mittelbar zwischen dem ersten Verbindungselement 20 und dem ersten Körper 11 wirkt. Vorteilhafter Weise entfaltet die Feder 3 ihre Federkraft erst ab einer vorgegebenen Temperaturschwelle T₁, beispielsweise in einem durch Erwärmung freigesetzten Formgedächtniszustand oberhalb der vorgegebenen Temperaturschwelle T₁.

Zum Zweck der Aufbringung der Federkraft ist der erste Körper 11 mit einer Hülse 4 versehen, die eine abgestufte Durchgangsbohrung 40 aufweist, durch die die Schraube 24 hindurchtritt. Der Kopf 24' der Schraube 24 ist dabei in einem topfartig geformten Einsatzstück 42 aufgenommen, das an einem ersten Ende 41 der Hülse 4 in die Durchgangsbohrung 40 der Hülse 4 eingesetzt ist und das mit einer ersten inneren Ringstufe 43 versehen ist, die eine Unterlegscheibe für die Schraube 24 bildet. Die als Druckfeder 30 ausgebildete Feder 3 stützt sich mit ihrem ersten Ende 31 auf der vom Kopf 24' der Schraube 24 abgewandten Seite der ersten inneren Ringstufe 43 ab. Am zweiten Ende 44 der Hülse 4 ist eine weitere innere Ringstufe 45 ausgebildet, die den Innendurchmesser der Durchgangsbohrung 40 verengt und gegen die sich die Feder 3 mit ihrem zweiten Ende 32 abstützt. Die Federkraft der als Druckfeder 30 ausgebildeten Feder 3 wirkt somit zwischen der in den ersten Körper 11 eingesetzten Hülse 4 und dem topfartig geformten Einsatzstück 42, mithin auf den Kopf 24' der Schraube 24 in einer die Schraube 24 aus der Hülse 4 herausdrückenden Kraftrichtung.

Wird die Verbindungseinrichtung 2 - beispielsweise beim Wiedereintritt in die Erdatmosphäre - erhitzt, so erweicht das thermoplastische Material des Innengewindeeinsatzes 26 und die Feder 3 gewinnt ihre im Formgedächtnis gespeicherte federnde Eigenschaft zurück. Die dadurch freigesetzte Federkraft drückt die Schraube 24 aus dem weich gewordenen Innengewindeeinsatz 26 heraus und die form- und kraftschlüssige Verbindung zwischen dem ersten Körper 11 und dem zweiten Körper 12 wird aufgelöst.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Weltraumgegenstand
- 2: Verbindungseinrichtung
- 3: Feder
- 4: Hülse
- 11: erster Körper
- 11': Satellitenrumpfstruktur
- 12: zweiter Körper
- 12': Batteriepack-Struktur
- 13: dritter Körper
- 13': erste Solarpanelstruktur
- 14: vierter Körper
- 14': zweite Solarpanelstruktur
- 20: erstes Verbindungselement
- 21: äußere Gewindeverbindung
- 22: zweites Verbindungselement
- 22': Kern des zweiten Verbindungselements 22
- 23: Außengewinde
- 24: Schraube
- 24': Kopf der Schraube 24
- 25: Innengewinde
- 26: Innengewindeeinsatz
- 27: Eingriffsabschnitt
- 28: Kopplungsabschnitt
- 29: Halterungsbauteil
- 30: Druckfeder
- 31: erstes Ende der Druckfeder 30
- 32: zweites Ende der Druckfeder 30
- 40: Durchgangsbohrung
- 41: erstes Ende der Hülse 4
- 42: topfartig geformtes Einsatzstück
- 43: erste innere Ringstufe
- 44: zweites Ende der Hülse 4
- 45: zweite innere Ringstufe
- T₁: Temperaturschwelle

## Patentansprüche

1. Verbindungseinrichtung zur Herstellung einer mechanischen Verbindung zwischen einem ersten Körper (11) und zumindest einem zweiten Körper (12), mit einem ersten Verbindungselement (20) und einem mit diesem zusammenwirkenden zweiten Verbindungselement (22), wobei das zweite Verbindungselement (22) einen Eingriffsabschnitt (27) für einen Kopplungsabschnitt (28) des ersten Verbindungselements (20) aufweist und wobei das erste Verbindungselement (20) und das zweite Verbindungselement (22) ausgebildet sind, um im miteinander verbundenen Zustand eine Formschlussverbindung zu bilden,
**dadurch gekennzeichnet,**
**dass** der Eingriffsabschnitt (27) an einem Halterungsbauteil (29) ausgebildet ist, das mit einem Kern des zweiten Verbindungselements (22) verbunden ist, wobei das Halterungsbauteil (29) und/oder das zweite Verbindungselement (22) aus einem thermoplastischen Material besteht oder ein solches aufweist, und
**dass** zumindest eine Feder (3) vorgesehen ist, die eine die beiden Verbindungselemente (20, 22) und/oder die beiden Körper (11, 12) voneinander abstoßende Kraft aufbringt, welche die beiden Verbindungselemente (20, 22) oberhalb einer vorgegebenen Temperaturschwelle (T₁) voneinander weg bewegt.

2. Verbindungseinrichtung nach Anspruch 1,
**dadurch gekennzeichnet,**
**dass** die Feder (3) ihre abstoßende Kraft erst oberhalb der vorgegebenen Temperaturschwelle (T₁) entfaltet.

3. Verbindungseinrichtung nach Anspruch 2,
**dadurch gekennzeichnet,**
**dass** die Feder (3) aus einer Hochtemperatur-Formgedächtnislegierung besteht oder eine solche aufweist und dass die Feder (3) die abstoßende Kraft in einem Formgedächtniszustand oberhalb der vorgegebenen Temperaturschwelle (T₁) aufbringt.

4. Verbindungseinrichtung nach einem der Ansprüche 1 bis 3,
**dadurch gekennzeichnet,**
**dass** die vorgegeben Temperaturschwelle (T₁) im Bereich der Schmelztemperatur oder im Bereich der Glasübergangstemperatur des thermoplastischen Materials liegt.

5. Verbindungseinrichtung nach einem der vorhergehenden Ansprüche, **dadurch gekennzeichnet,**
**dass** die zumindest eine Feder (3) zwischen dem ersten Verbindungselement (20) und dem ersten Körper (11) wirkt.

6. Verbindungseinrichtung nach einem der Ansprüche 1 bis 4,
**dadurch gekennzeichnet,**
**dass** die zumindest eine Feder (3) zwischen dem ersten Verbindungselement (20) und dem zweiten Körper (12) wirkt.

7. Verbindungseinrichtung nach einem der Ansprüche 1 bis 4,
**dadurch gekennzeichnet,**
**dass** die zumindest eine Feder (3) zwischen dem ersten Körper (11) und dem zweiten Körper (12) wirkt.

8. Verbindungseinrichtung nach einem der vorhergehenden Ansprüche, **dadurch gekennzeichnet,**
**dass** die Feder (3) eine Druckfeder (30) ist.

9. Verbindungseinrichtung nach einem der vorhergehenden Ansprüche, **dadurch gekennzeichnet,**
**dass** das thermoplastische Material einen Schmelzpunkt oder einen Glasübergangspunkt aufweist, der in einem Bereich zwischen 150 °C und 300 °C, vorzugsweise zwischen 200 °C und 250 °C liegt.

10. Verbindungseinrichtung nach einem der vorhergehenden Ansprüche, **dadurch gekennzeichnet,**
**dass** die Temperaturschwelle (T₁) der Hochtemperatur-Formgedächtnislegierung in einem Bereich zwischen 150 °C und 300 °C, vorzugsweise zwischen 200 °C und 250 °C liegt.

11. Verbindungseinrichtung nach einem der vorhergehenden Ansprüche, **dadurch gekennzeichnet,**
**dass** der Eingriffsabschnitt (27) und der Kopplungsabschnitt (28) eine Gewindepaarung bilden.

12. Verbindungseinrichtung nach Anspruch 11,
**dadurch gekennzeichnet,**
**dass** das erste Verbindungselement (20) eine Schraube (24) und das zweite Verbindungselement (22) eine Mutter oder ein Innengewindeeinsatz (26) ist.

13. Weltraumgegenstand mit zumindest zwei Strukturbauteilen (11, 12, 13, 14), die mittels zumindest einer Verbindungseinrichtung (2) gemäß einem der vorhergehenden Ansprüche miteinander verbunden sind.
